# EUROPEAN PATENT SPECIFICATION

(11) **EP 4 538 124 B1**
(45) Date of publication and mention of the grant of the patent: **13.05.2026**
(21) Application number: 24205667.9
(22) Date of filing: 09.10.2024
(51) Int. Cl.: B60R 21/13, B62D 33/06

(54) **WORK VEHICLE WITH A ROOF SAFETY ASSEMBLY**
ARBEITSFAHRZEUG MIT DACHSICHERHEITSANORDNUNG
VÉHICULE DE TRAVAIL AVEC ENSEMBLE DE SÉCURITÉ DE TOIT

(30) Priority: 11.10.2023 IT 202300021153
(43) Date of publication of application: 16.04.2025
(73) Proprietor: CNH Industrial Italia S.p.A., 10156 Torino (IT)
(72) Inventor: Monacelli, Gennaro, 10156 Turin (IT); Cordua, Giuseppe, 10156 Turin (IT)
(74) Representative: CNH Industrial IP Department

(56) References cited:
- WO-A1-2014/195316
- JP-A- 2005 145 182
- US-A1- 2019 225 176

## Description

### TECHNICAL FIELD

The present invention concerns a work vehicle comprising a roof safety assembly.

The present invention finds its preferred, although not exclusive, application in an agricultural vehicle, such as a tractor.

### BACKGROUND OF THE INVENTION

As is known, an agricultural vehicle, such as a tractor, is subject to the risk of rollover. Documents JP 2005 145182 A and US 2019/225176 A1 disclose each a work vehicle according to the preamble of claim 1.

In particular, it is estimated that at least one in ten operators will overturn a tractor in their lifetime. Tractor rollovers are the main cause of fatal accidents on several farms. The probability of the operator dying in case of a tractor rollover increases if the operator is unbelted. Eighty per cent of tractor rollover fatalities also involve experienced operators.

Furthermore, even when the operator survives, the tractor cabin is severely damaged after a rollover.

Therefore, the need is felt to improve safety and robustness of known work vehicles.

An aim of the present invention is to satisfy the aforementioned need in a cost-effective and optimised manner.

### SUMMARY OF THE INVENTION

The aforementioned aim is reached by a work vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- figure 1 is a side view of a work vehicle according to the invention;
- figure 2 is a schematic cross-sectional view of a cabin of the work vehicle of figure 1, with parts removed for the sake of clarity;
- figure 3 is a perspective view of the cabin of figure 2, with parts removed for the sake of clarity;
- figure 4 is a perspective view of the roof safety assembly and
- figure 5 is an exploded perspective view of the roof safety assembly of figure 4.

### DETAILED DESCRIPTION OF THE INVENTION

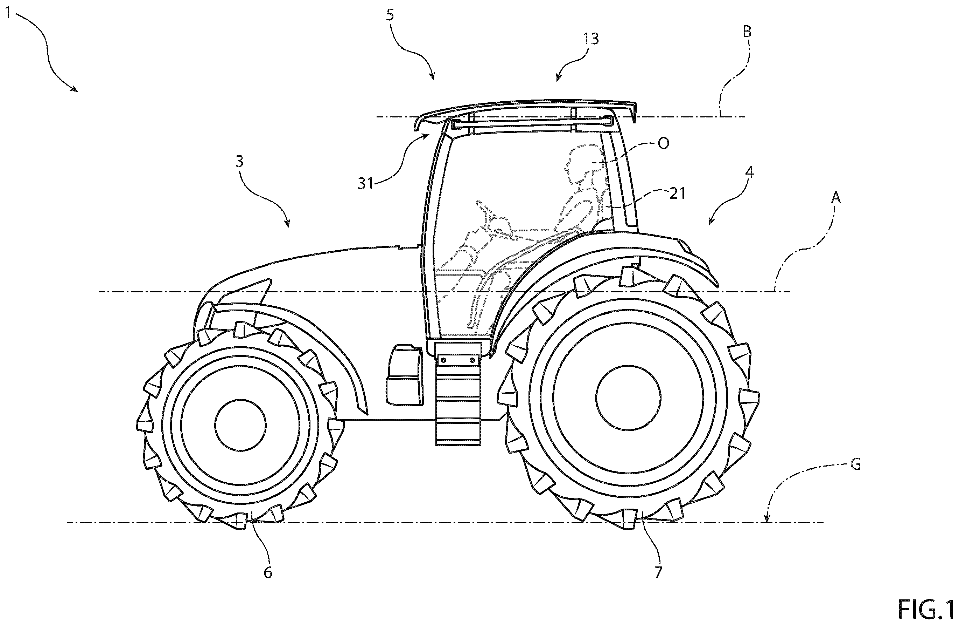

Figure 1 illustrates a work vehicle 1 according to the present invention. Preferably, the vehicle 1 is an agricultural vehicle, such as a tractor.

The vehicle 1 is of known type, extends along a longitudinal axis A and comprises a front portion 3, a rear portion 4, and a cabin 5 longitudinally interposed between the front portion 3 and the rear portion 4.

Conveniently, the vehicle 1 comprises a pair of front wheels 6 arranged in the front portion 3 and a pair of rear wheels 7 arranged in the rear portion 4.

The cabin 5 comprises a floor 11, a plurality of pillars 12 and a roof assembly 13 carried by the plurality of pillars 12.

In particular, the plurality of pillars 12 comprises two front pillars 12a, connected to the front portion 3 of the vehicle 1, and two rear pillars 12b, connected to the rear portion 4 of the vehicle 1. The floor 11 extends substantially parallel to the longitudinal axis A, while the two front pillars 12a and the two rear pillars 12b are inclined, e.g. orthogonal, with respect to the longitudinal axis A.

The roof assembly 13 comprises a roof 14 configured to cover the cabin 5 and a plurality of elements 15 arranged on the side of the roof 14 facing the floor 11.

In particular, the roof 14 extends substantially parallel to the longitudinal axis A, and is substantially parallel to the floor 11. The plurality of elements 15 may comprise roller blinds.

Conveniently, the cabin 5 is configured to house a seat 21 for an occupant O of the cabin, and comprises a plurality of windowed areas 22 allowing the occupant O to see outside the cabin 5.

In particular, the seat 21 is carried by the floor 11, and the plurality of windowed areas 22 comprise a front windowed area 22a, arranged between the two front pillars 12a, and two side windowed areas 22b, each arranged between a respective front pillar 12a and a respective rear pillar 12b.

The vehicle 1 comprises a roof safety assembly 31, as described in detail hereinafter. The roof safety assembly 31 is interposed between the pillars 12 and the roof 14.

In particular, the roof safety assembly 31 is arranged on the side of the roof 14 facing the floor 11, and preferably near the elements 15 of the roof assembly 13.

Conveniently, the roof safety assembly 31 is configured to be carried by the pillars 12.

Preferably, the roof safety assembly 31 is detachably connected to, i.e. detachable from, the pillars 12.

In particular, the roof safety assembly 31 is configured to be connected to the pillars 12 via a detachable connection, preferably via threaded elements such as screws.

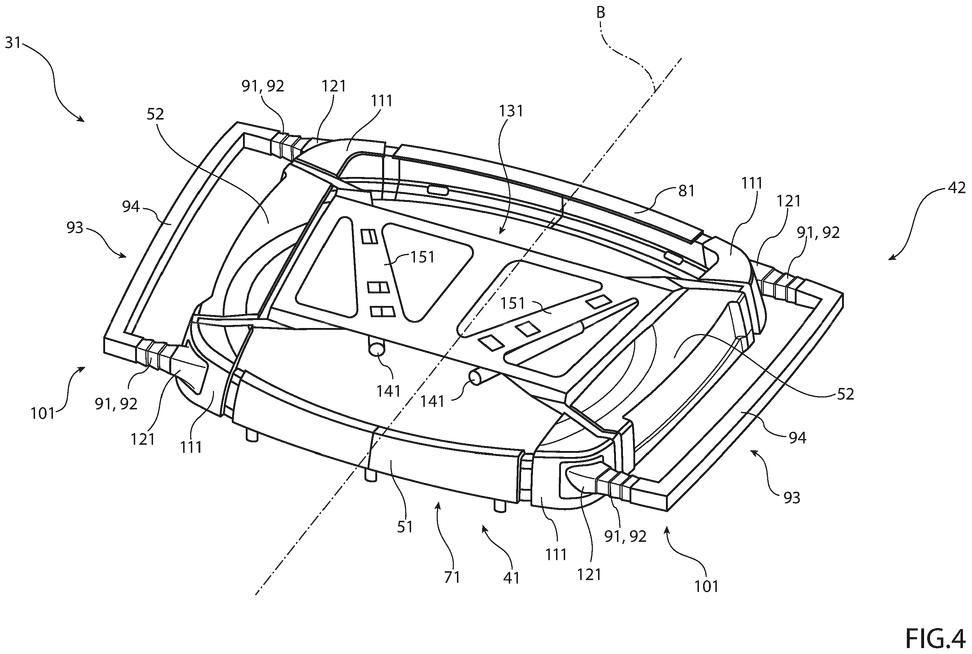

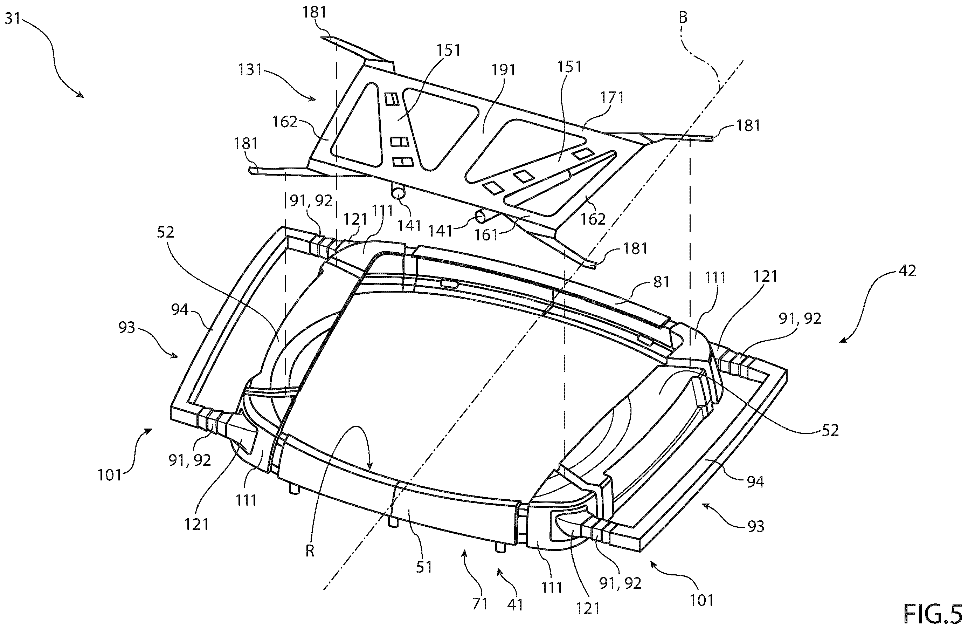

The roof safety assembly 31 (figures 4 and 5) comprises a support structure 41 configured to be connected to the cabin 5 and impact-absorbing means 42 configured to absorb energy in case of impact of the vehicle 1 with ground G. The impact-absorbing means 42 are configured to be carried by the support structure 41 and surround at least a portion of a perimeter of the support structure 41.

In particular, the impact-absorbing means 42 are connected to the support structure 41 and at least partially surround the perimeter of the support structure 41. Preferably, the impact-absorbing means 42 are detachably connected to, i.e. detachable from, the support structure 41, as described in detail hereinafter.

Preferably, the support structure 41 defines a region R and the impact-absorbing means 42 extend externally to the region R.

In particular, the perimeter of the support structure 41 defines the region R and the impact-absorbing means 42 extends externally thereto. In other words, the impact-absorbing means 42 extend outwards from the support structure 41. Preferably, the region R is convex.

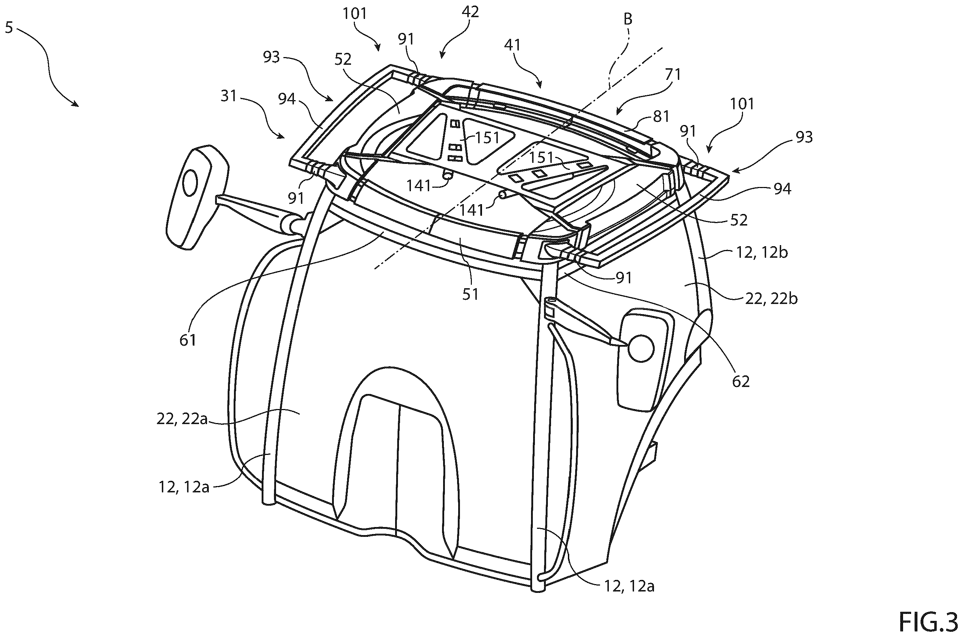

Preferably (figure 3), the support structure 41 defines a longitudinal axis B and comprises a front portion 51 intersecting the longitudinal axis B and two side portions 52 extending from opposite sides with respect to the longitudinal axis B. The front portion 51 is configured to be connected to a front portion 61 of the cabin 5 and the two side portions 52 are configured to be connected to respective side portions 62 of the cabin 5. The impact-absorbing means 42 are configured to surround at least one of the two side portions 52 of the support structure 41.

In particular, the front portion 51 of the support structure 41 intersects the longitudinal axis B, whereas the two side portions 52 of the support structure 41 do not intersect the longitudinal axis B. In use, the longitudinal axis B is parallel to the longitudinal axis A of the vehicle 1. Conveniently, the front portion 61 of the cabin 5 faces the front portion 3 of the vehicle 1, while the side portions 62 of the cabin 5 extend sideways. Preferably, the front portion 51 of the support structure 41 is interposed between the roof 14 and the front windowed area 22a, while the side portions 52 of the support structure 41 are interposed between the roof 14 and the respective side windowed areas 22b. Conveniently, at least one of the two side portions 52 of the support structure 41 is interposed between the longitudinal axis B and the impact-absorbing means 42. Preferably, each side portion 52 of the support structure 41 is interposed between the longitudinal axis B and the impact-absorbing means 42, i.e. the impact-absorbing means 42 surround both side portions 52 of the support structure 41.

Preferably, the support structure 41 comprises a frame 71 substantially shaped as a quadrilateral. The front portion 51 of the support structure 41 substantially corresponds to a front edge of the quadrilateral and the two side portions 52 of the support structure 41 substantially correspond to side edges of the quadrilateral connected to the front edge. Conveniently, the support structure 41 comprises a rear portion 81 which substantially corresponds to the fourth edge of the quadrilateral and is connected to the side edges of the quadrilateral.

In particular, the support structure 41 is hollow. The front portion 51 and the side portions 52, as well as the rear portion 81, of the support structure 41 are elongated elements, such as beams. The shape of the frame 71 is substantially a quadrilateral which defines the region R and extends parallel to the longitudinal axis B. Preferably, the quadrilateral is a trapezium, and the front portion 51 and the rear portion 81 of the support structure 41 substantially correspond to the parallel edges of the trapezium. Preferably, the trapezium is isosceles, i.e. the side portions 52 of the support structure 41 have substantially the same length. In particular, the trapezium may be a rectangle, such as a square. Preferably, the front portion 51 of the support structure 41 extends substantially orthogonally to the longitudinal axis B.

Preferably, the support structure 41 extends substantially parallel to the roof 14, i.e. the quadrilateral is substantially parallel to the roof 14. Conveniently, the support structure 41 is substantially coplanar to the roof assembly 13.

Conveniently, the support structure 41 is symmetrical with respect to a plane parallel to the longitudinal axis B and orthogonal to the quadrilateral.

Conveniently, the support structure 41 is made of metal. Preferably, the impact-absorbing means 42 comprise two deformable elements 91. Each deformable element 91 is connected to the support structure 41.

Each deformable element 91 is configured to absorb energy by deforming in case of impact of the vehicle 1 with the ground G.

Conveniently, the deformable elements 91 have substantially the same shape.

Each deformable element 91 comprises an accordion-shaped element 92.

In particular, each element 92 is shaped as an accordion so as to absorb energy quickly and gradually, by progressively closing in case of impact of the vehicle 1 with the ground G. Preferably, each accordion-shaped element 92 is made of metal.

Conveniently, the accordion-shaped elements 92 have substantially the same shape.

Preferably, the impact-absorbing means 42 comprise connecting means 93 configured to connect the two deformable elements 91. The connecting means 93 are more rigid than the deformable elements 91.

In particular, the connecting means 93 are configured to transmit energy to the two deformable elements 91 in case of impact of the vehicle 1 with the ground G, so that both deformable elements 91 can absorb energy in case of impact of the vehicle 1 with the ground G. Conveniently, the connecting means 93 are more rigid, i.e. less easily deformable, than the deformable elements 91.

Preferably, the connecting means 93 comprise a bar 94.

In particular, the bar 94 is a metal bar which is more rigid, i.e. less easily deformable, than the two deformable elements 91.

Preferably, the impact-absorbing means 42 comprise two impact-absorbing structures 101. Each impact-absorbing structure 101 comprises two of the aforementioned deformable elements 91.

In particular, each deformable element 91 of each impact-absorbing structure 101 is configured to be connected to the support structure 41. Preferably, each deformable element 91 of each impact-absorbing structure 101 comprises the aforementioned accordion-shaped element 92. Conveniently, the two deformable elements 91 of each impact-absorbing structure 101 are connected by the aforementioned connecting means 93, which are more rigid than the deformable elements 91.

Conveniently, the impact-absorbing structures 101 have substantially the same shape.

Preferably, the two impact-absorbing structures 101 are configured to surround, respectively, the two side portions 52 of the support structure 41.

In particular, each side portion 52 of the support structure 41 is interposed between the longitudinal axis B and a respective impact-absorbing structure 101, i.e. each side portion 52 of the support structure 41 faces the respective impact-absorbing structure 101. In other words, each impact-absorbing structure 101 is configured to surround a respective side portion 52 of the support structure 41.

Preferably, each impact-absorbing structure 101 comprises the aforementioned bar 94, i.e. each impact-absorbing structure 101 comprises a respective bar 94. The bar 94 of each impact-absorbing structure 101 extends substantially parallel to the respective side portion 52 of the support structure 41.

In particular, the two deformable elements 91 of each impact-absorbing structure 101 are connected by the respective bar 94, which is substantially parallel to the respective side portion 52 of the support structure 41. The bar 94 is configured to transmit energy to the two deformable elements 91 of the respective impact-absorbing structure 101 in case of impact of the vehicle 1 with the ground G, so that both deformable elements 91 of the respective impact-absorbing structure 101 can absorb energy in case of impact of the vehicle 1 with the ground G. Conveniently, the bar 94 is more rigid, i.e. less easily deformable, than the two deformable elements 91 of the respective impact-absorbing structure 101. Preferably, the bar 94 comprises two end portions which are bent, e.g. orthogonally, towards the two deformable elements 91 of the respective impact-absorbing structure 101.

Preferably, each impact-absorbing structure 101 comprises two coupling elements 111 corresponding to respective corners of the aforementioned quadrilateral and configured to be connected to respective ends of the respective side portion 52 of the support structure 41.

In particular, the impact-absorbing means 42 comprise four coupling elements 111, two for each impact-absorbing structure 101. The four coupling elements 111 define respective angular portions of the support structure 41 which substantially correspond to the four corners of the quadrilateral. Each coupling element 111 of each impact-absorbing structure 101 is configured to be connected to a respective end of the side portion 52 surrounded by the impact-absorbing structure 101.

Conveniently, each coupling element 111 of each impact-absorbing structure 101 is also configured to be connected to a respective end of either the front portion 51 of the support structure 41 or the rear portion 81 of the support structure 41. In other words, two coupling elements 111 are configured to be connected to a respective end of the front portion 51 of the support structure 41 and to a respective end of the respective side portion 52 of the support structure 41, and two coupling elements 111 are configured to be connected to a respective end of the rear portion 81 of the support structure 41 and to a respective end of the respective side portion 52 of the support structure 41.

Conveniently, the coupling elements 111 have substantially the same shape.

Preferably, each impact-absorbing structure 101 comprises two intermediate elements 121. Each intermediate element 121 is interposed between one of the aforementioned coupling elements 111 and one of the aforementioned deformable elements 91.

In particular, the impact-absorbing means 42 comprise four intermediate elements 121, two for each impact-absorbing structure 101. Each deformable element 91 of each impact-absorbing structure 101 is connected to the respective coupling element 111 via the respective intermediate element 121. Preferably, each intermediate element 121 is welded to the respective coupling element 111.

Conveniently, the intermediate elements 121 have substantially the same shape.

Preferably, each intermediate element 121 extends substantially parallel to the front portion 51 of the support structure 41.

In particular, each intermediate element 121 extends, from the respective coupling element 111, substantially orthogonally to the longitudinal axis B. Preferably, each intermediate element 121 extends, from the respective coupling element 111, substantially parallel to the front portion 51 of the support structure 41 and the rear portion 81 of the support structure 41.

Preferably, each coupling element 111 is configured to be connected to a respective pillar 12 of the cabin.

In particular, the four coupling elements 111 are configured to be connected to the four pillars 12 of the cabin 5. Conveniently, two coupling elements 111 are configured to be connected, respectively, to the two front pillars 12a, and two coupling elements 111 are configured to be connected, respectively, to the two rear pillars 12b. Preferably, the coupling elements 111 are configured to be carried by the pillars 12.

Preferably, each impact-absorbing structure 101 is detachable from the support structure 41.

In particular, each impact-absorbing structure 101 is configured to be connected to the support structure 41 via a detachable connection, preferably via threaded elements such as screws. Conveniently, the coupling elements 111 of the impact-absorbing structures 101 are detachably connected to, i.e. detachable from, the support structure 41. Each coupling element 111 of each impact-absorbing structure 101 is configured to be detachably connected to, i.e. detachable from, a respective end of the side portion 52 surrounded by the impact-absorbing structure 101. Conveniently, each coupling element 111 of each impact-absorbing structure 101 is also configured to be detachably connected to, i.e. detachable from, a respective end of either the front portion 51 of the support structure 41 or the rear portion 81 of the support structure 41. In other words, two coupling elements 111 are configured to be detachably connected to, i.e. detachable from, a respective end of the front portion 51 of the support structure 41 and to a respective end of the respective side portion 52 of the support structure 41, and two coupling elements 111 are configured to be detachably connected to, i.e. detachable from, a respective end of the rear portion 81 of the support structure 41 and to a respective end of the respective side portion 52 of the support structure 41.

Preferably, the roof safety assembly 31 comprises a subframe 131 configured to be carried by the support structure 41, and one or more airbags 141 configured to be carried by the subframe 131.

In particular, the frame 71 is configured to carry the subframe 131 which in turn is configured to carry one or more airbags 141. Conveniently, each airbag 141 comprises an inflatable bag 142 configured to be automatically inflated in case of impact of the vehicle 1 with the ground G.

Preferably, the subframe 131 is detachably connected to, i.e. detachable from, the support structure 41.

In particular, the subframe 131 is configured to be connected to the support structure 41 via a detachable connection, preferably via threaded elements such as screws.

Preferably, the subframe 131 extends internally to the region R.

In particular, the perimeter of the support structure 41 defines the region R and the subframe 131 extends internally thereto. In other words, the subframe 131 extends inwards from the support structure 41.

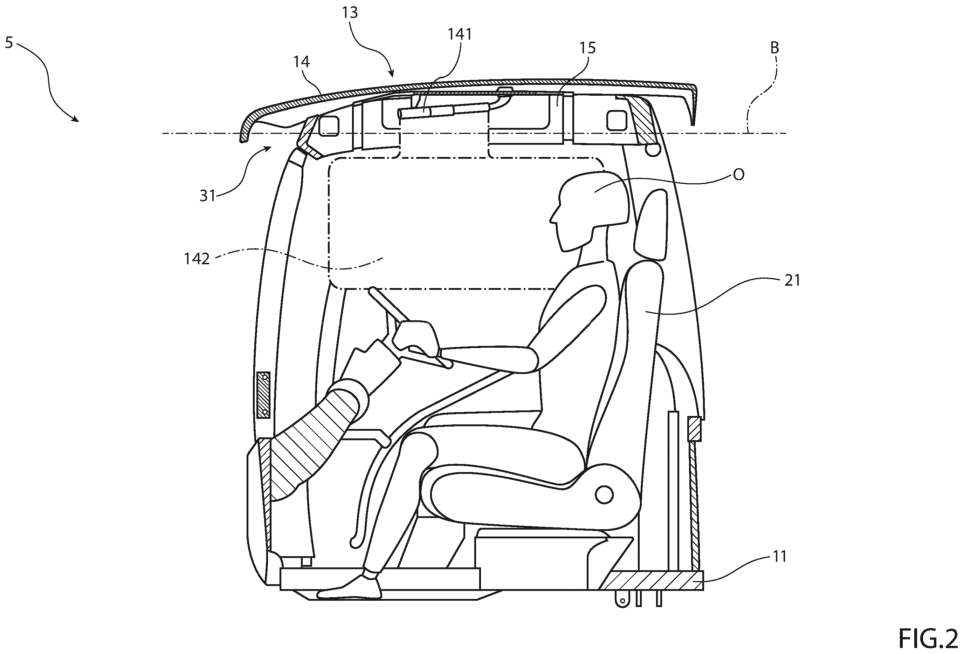

Conveniently (figure 2), the bag 142 of each airbag 141 is configured to be automatically inflated inside the cabin 5 so as to protect the occupant O in case of impact of the vehicle 1 with the ground G. Preferably, the bag 142 of each airbag 141 is configured to expand from the subframe 131 towards the floor 11 of the cabin 5 while being automatically inflated.

Preferably, the subframe 131 comprises two brackets 151 configured to carry, respectively, two of the aforementioned airbags 141.

In particular (figure 5), each bracket 141 is configured to carry a respective airbag 141. Preferably, the subframe 131 comprises a front portion 161 intersecting the longitudinal axis B and two side portions 162 extending from opposite sides with respect to the longitudinal axis B. The front portion 161 of the subframe 131 faces the front portion 51 of the support structure 41, while the two side portions 162 of the subframe 131 face the respective side portions 52 of the support structure 41. Conveniently, the subframe 131 comprises a rear portion 171 connected to the side portions 162 of the subframe. The front portion 161, the side portions 162 and the rear portion 171 of the subframe 131 define a quadrilateral which extends internally to the region R and extends parallel to the longitudinal axis B. Preferably, the quadrilateral is a trapezium, and the front portion 161 and the rear portion 171 of the subframe 131 substantially correspond to the parallel edges of the trapezium. Preferably, the trapezium is isosceles, i.e. the side portions 162 of the subframe 131 have substantially the same length. In particular, the trapezium may be a rectangle, such as a square. Preferably, the front portion 161 of the subframe 131 extends substantially orthogonally to the longitudinal axis B.

Conveniently, the subframe 131 comprises connecting portions 181 configured to connect the subframe 131 to the support structure 41. Preferably, each connecting portion 181 is configured to be connected to the support structure 41 via a detachable connection, preferably via threaded elements such as screws. Each connecting portion 181 is connected to at least one of the front portion 161, the side portions 162 and the rear portion 171 of the subframe 131. Preferably, each connecting portion 181 extends from a respective corner of the quadrilateral defined by the front portion 161, the side portions 162 and the rear portion 171 of the subframe 131.

Preferably, the subframe 131 comprises an intermediate portion 191 which is interposed between the side portions 162 of the subframe 131, connects the front portion 161 and the rear portion 171 of the subframe 131 and is preferably parallel to the longitudinal axis B.

Conveniently, each bracket 151 is connected to at least one of the front portion 161, the side portions 162, the rear portion 171 and the intermediate portion 191 of the subframe 131.

Preferably, the two brackets 151 extend from opposite sides with respect to the longitudinal axis B.

Conveniently, the brackets 151 have substantially the same shape.

Preferably, the two brackets 151 are convergent towards the front portion 51 of the support structure 41.

In particular, the two brackets 151 are convergent towards the front portion 161 of the subframe 131, which faces the front portion 51 of the support structure 41 and is substantially parallel to the front portion 51 of the support structure 41. Conveniently, each bracket 151 extends from the intersection between the rear portion 171 and the respective side portion 162 of the subframe 131 to the intersection between the front portion 161 and the intermediate portion 191 of the subframe 131. Preferably, the two brackets 151 jointly define a "V shape".

Conveniently, the bag 142 of each airbag 141 is configured to be interposed between the occupant O, in particular head and torso of the occupant O, and a respective front pillar 12a while being automatically inflated. Preferably, the bags 142 of the airbags 141 are configured to be interposed between the occupant O, in particular head and torso of the occupant O, and the plurality of windowed areas 22 while being automatically inflated.

Preferably, the subframe 131 extends substantially parallel to the roof 14, i.e. the quadrilateral defined by the front portion 161, the side portions 162 and the rear portion 171 of the subframe 131 is substantially parallel to the roof 14. Conveniently, the subframe 131 is substantially coplanar to the support structure 41.

Conveniently, the subframe 131 is symmetrical with respect to a plane parallel to the longitudinal axis B and orthogonal to the quadrilateral defined by the front portion 161, the side portions 162 and the rear portion 171 of the subframe 131.

In use, the roof safety assembly 31 is connected to the cabin 5 of the vehicle 1.

In particular, the roof safety assembly 31 is interposed between the pillars 12 and the roof 14. Conveniently, the roof safety assembly 31 is carried by the pillars 12. Preferably, the roof safety assembly 31 is detachably connected to, i.e. detachable from, the pillars 12. Preferably, the front portion 51 of the support structure 41 is connected to the front portion 61 of the cabin 5 and the two side portions 52 of the support structure 41 are connected to the respective side portions 62 of the cabin 5. Preferably, the four coupling elements 111 are connected to the four pillars 12 of the cabin 5. Conveniently, two coupling elements 111 are connected, respectively, to the two front pillars 12a, and two coupling elements 111 are connected, respectively, to the two rear pillars 12b.

Conveniently, the impact-absorbing means 42, in particular the two impact-absorbing structures 101, are connected, preferably detachably, to the support structure 41. Preferably, the subframe 131 is connected, preferably detachably, to the support structure 41.

In case of impact of the vehicle 1 with the ground G, i.e. in case of rollover, the impact-absorbing means 42, which surround at least a portion of a perimeter of the support structure 41, absorb the energy transmitted by the impact of the cabin 5 with the ground G, thus reducing the energy transmitted to the support structure 41 and in turn to the cabin 5.

In particular, the deformable elements 91 absorb energy by deforming. Conveniently, the accordion-shaped elements 92 absorb energy quickly and gradually, by progressively closing. The connecting means 93 transmit energy to the two deformable elements 91, so that both deformable elements 91 can absorb energy.

Conveniently, the two impact-absorbing structures 101 surround, respectively, the two side portions 52 of the support structure 41, thus effectively absorbing energy in case of side rollovers (also known as "roll-on-side").

In particular, the deformable elements 91 of the impact-absorbing structures 101 are connected to the respective coupling elements 111 via the respective intermediate elements 121 which extend substantially parallel to the front portion 51 of the support structure 41. The deformable elements 91 of the impact-absorbing structures 101 absorb the energy transmitted by the bars 94, which are substantially parallel to the respective side portions 52 of the support structure 41.

Conveniently, the bag 142 of each airbag 141, carried by the subframe 131, is automatically inflated in case of impact of the vehicle 1 with the ground G and further protects the occupant O.

In particular, while being automatically inflated, the bag 142 of each airbag 141, carried by the respective bracket 151, is interposed between the occupant O, in particular head and torso of the occupant O, and a respective front pillar 12a. Preferably, the bags 142 of the airbags 141 are interposed between the occupant O, in particular head and torso of the occupant O, and the plurality of windowed areas 22 while being automatically inflated. Conveniently, the occupant O, in particular head and torso of the occupant O, is contained between, and substantially held in position by, the seat 21 and the bags 142 of the airbags 141 while being automatically inflated.

In view of the foregoing, the advantages of the vehicle 1 according to the invention are apparent.

In particular, the roof safety assembly 31 allows to improve safety and robustness of the vehicle 1 by minimising deformation of the cabin 5 and the risk of injury to the occupant O.

In case of impact of the vehicle 1 with the ground G, i.e. in case of rollover, the impact-absorbing means 42, which surround at least a portion of a perimeter of the support structure 41, allow to absorb the energy transmitted by the impact of the cabin 5 with the ground G, thus reducing the energy transmitted to the support structure 41 and in turn to the cabin 5.

In particular, the deformable elements 91 allow to absorb energy by deforming. Conveniently, the accordion-shaped elements 92 allow to absorb energy quickly and gradually, by progressively closing. The connecting means 93 allow to transmit energy to the two deformable elements 91, so that both deformable elements 91 can absorb energy, by ensuring better contact with the ground G. This is especially useful if the soil is soft.

Conveniently, the two impact-absorbing structures 101 allow to effectively absorb energy in case of side rollovers (also known as "roll-on-side") since they surround, respectively, the two side portions 52 of the support structure 41.

In particular, the coupling elements 111, the intermediate elements 121 carried by the coupling elements 111, the deformable elements 91 carried by the intermediate elements 121, and the bars 94 connecting the deformable elements 121 jointly allow to absorb the energy transmitted by the impact of the cabin 5 with the ground G, thus reducing the energy transmitted to the support structure 41 and in turn to the cabin 5.

Conveniently, the bag 142 of each airbag 141, carried by the subframe 131, allows to further protect the occupant O in case of impact of the vehicle 1 with the ground G.

In particular, while being automatically inflated, the bags 142 of the airbags 141 prevent the occupant O, in particular head and torso of the occupant O, to impact with the front pillars 12a and preferably with the plurality of windowed areas 22, thus avoiding direct collision of the occupant O with hard points inside the cabin 5. This is especially useful if the operator O is unbelted.

Furthermore, the roof safety assembly 31 can be integrated on the cabin 5 of an existing vehicle 1 unprovided therewith, thus acting as a retrofit.

The roof safety assembly 31 allows to minimise damages to the cabin 5 in case of rollover.

Furthermore, after the rollover, only the roof safety assembly 31 or only some components thereof may be damaged. Conveniently, only the roof safety assembly 31 or only the damaged components thereof need to be replaced.

Preferably, the roof safety assembly 31 is detachably connected to, i.e. detachable from, the pillars 12. Therefore, if only the roof safety assembly 31 is damaged, the roof safety assembly 31 can be detached from the pillars 12 and replaced.

Preferably, the impact-absorbing means 42 are detachably connected to, i.e. detachable from, the support structure 41. Therefore, if only the impact-absorbing means 42 are damaged, the impact-absorbing means 42 can be detached from the support structure 41 and replaced.

In particular, each impact-absorbing structure 101 is detachably connected to, i.e. detachable from, the support structure 41. Therefore, if only the impact-absorbing structures 101 are damaged, the impact-absorbing structures 101 can be detached from the support structure 41 and replaced. Conveniently, if only one impact-absorbing structure 101 is damaged, such impact-absorbing structure 101 can be detached from the support structure 41 and replaced.

Preferably, the subframe 131 is detachably connected to, i.e. detachable from, the support structure 41. Therefore, if only the subframe 131 is damaged, the subframe 131 can be detached from the support structure 41 and replaced.

It is clear that modifications can be made to the described roof safety assembly 31 and vehicle 1 which do not extend beyond the scope of protection defined by the claims.

For example, the shape of the components may be different from that described.

The support structure 41 may be non-hollow, e.g. shaped similarly to a roof, and/or the region R may have a more complex shape.

The impact-absorbing means 42 may completely surround the perimeter of the support structure 41.

The connecting means 93 may comprise a plurality of bars 94 configured to connect the two deformable elements 91, e.g. if the two deformable elements 91 are connected to different portions of the support structure 41. For example, the two deformable elements 91 may be connected to the respective side portions 52 of the support structure 41 and the connecting means 93 may comprise three bars 94 which connect the two deformable elements 91, i.e. a first bar 94 and a second bar 94 which are connected, respectively, to the two deformable elements 91 and a third bar 94 which is connected to the first bar 94 and the second bar 94.

The one or more airbags 141 may be directly carried by the support structure 41.

## Claims

1. Work vehicle comprising a cabin (5), wherein the cabin (5) comprises a plurality of pillars (12) and a roof (14), a roof safety assembly (31) being interposed between the pillars (12) and the roof (14);
said roof safety assembly (31) further comprising a support structure (41) connected to the cabin (5) and impact-absorbing means (42) configured to absorb energy in case of impact of the vehicle (1) with ground (G), wherein the impact-absorbing means (42) are carried by the support structure (41) and surround at least a portion of a perimeter of the support structure (41), and wherein
the impact-absorbing means (42) comprise two deformable elements (91), each deformable element (91) being connected to the support structure (41),
said work vehicle being **characterized in that** each deformable element (91) comprises an accordion-shaped element (92).

2. Work vehicle as claimed in claim 1, wherein the support structure (41) defines a region (R) and the impact-absorbing means (42) extend externally to said region (R).

3. Work vehicle as claimed in claim 1 or 2, wherein the support structure (41) defines a longitudinal axis (B) and comprises a front portion (51) intersecting the longitudinal axis (B) and two side portions (52) extending from opposite sides with respect to the longitudinal axis (B), wherein the front portion (51) is connected to a front portion (61) of the cabin (5) and the two side portions (52) are connected to respective side portions (62) of the cabin (5), the impact-absorbing means (42) surround at least one of the two side portions (52) of the support structure (41).

4. Work vehicle as claimed in claim 3, wherein the support structure (41) comprises a frame (71) substantially shaped as a quadrilateral, the front portion (51) of the support structure (41) substantially corresponding to a front edge of the quadrilateral and the two side portions (52) of the support structure (41) substantially corresponding to side edges of the quadrilateral connected to the front edge.

5. Work vehicle as claimed in any of the preceding claim, wherein the impact-absorbing means (42) comprise connecting means (93) to connect the two deformable elements (91), the connecting means (93) being more rigid than the deformable elements (91).

6. Work vehicle as claimed in claim 5, wherein the connecting means (93) comprise a bar (94).

7. Work vehicle as claimed in any of the preceding claim, wherein the impact-absorbing means (42) comprise two impact-absorbing structures (101), each impact-absorbing structure (101) comprising two of said deformable elements (91).

8. Work vehicle as claimed in claim 7 when dependent on claim 3 or 4, wherein the two impact-absorbing structures (101) surround, respectively, the two side portions (52) of the support structure (41).

9. Work vehicle as claimed in claim 8 when dependent on claim 8, wherein each impact-absorbing structure (101) comprises said bar (94), the bar (94) of each impact-absorbing structure (101) extending substantially parallel to the respective side portion (52) of the support structure (41).

10. Work vehicle as claimed in any of claims 7 to 11 when dependent on claim 4, wherein each impact-absorbing structure (101) comprises two coupling elements (111) corresponding to respective corners of said quadrilateral and connected to respective ends of the respective side portion (52) of the support structure (41).

11. Work vehicle as claimed in claim 10, wherein each impact-absorbing structure (101) comprises two intermediate elements (121), each intermediate element (121) being interposed between one of said coupling elements (111) and one of said deformable elements (91).

12. Work vehicle as claimed in claim 11, wherein each intermediate element (121) extends substantially parallel to the front portion (51) of the support structure (41).

13. Work vehicle as claimed in any of claims 10 to 12, wherein each coupling element (111) is connected to a respective pillar (12) of the cabin (5).

14. Work vehicle as claimed in any of claims 7 to 13, wherein each impact-absorbing structure (101) is detachable from the support structure (41).

15. Work vehicle as claimed in any of the preceding claims, comprising a subframe (131) carried by the support structure (41), and one or more airbags (141) carried by the subframe (131).

16. Work vehicle as claimed in claim 15 when dependent on claim 2, wherein the subframe (131) extends internally to said region (R).

17. Work vehicle as claimed in claim 15 or 16, wherein the subframe (131) comprises two brackets (151) to carry, respectively, two of said airbags (141).

18. Work vehicle as claimed in claim 17 when dependent on claim 3 or 4, wherein the two brackets (151) are convergent towards the front portion (51) of the support structure (41).

## Patentansprüche

1. Arbeitsfahrzeug, das eine Kabine (5) umfasst, wobei die Kabine (5) eine Vielzahl von Säulen (12) und ein Dach (14) umfasst, wobei eine Dachsicherheitsanordnung (31) zwischen den Säulen (12) und dem Dach (14) angeordnet ist;
wobei die Dachsicherheitsanordnung (31) ferner eine mit der Kabine (5) verbundene Stützstruktur (41) und stoßabsorbierende Mittel (42) umfasst, die konfiguriert sind, um Energie im Falle eines Aufpralls des Fahrzeugs (1) mit dem Boden (G) zu absorbieren, wobei die stoßabsorbierenden Mittel (42) von der Stützstruktur (41) getragen werden und zumindest einen Abschnitt eines Umfangs der Stützstruktur (41) umgeben, und wobei
die stoßabsorbierenden Mittel (42) zwei verformbare Elemente (91) umfassen, wobei jedes verformbare Element (91) mit der Stützstruktur (41) verbunden ist,
wobei das Arbeitsfahrzeug **dadurch gekennzeichnet ist, dass** jedes verformbare Element (91) ein ziehharmonikaförmiges Element (92) umfasst.

2. Arbeitsfahrzeug nach Anspruch 1, wobei die Stützstruktur (41) einen Bereich (R) definiert und sich die stoßabsorbierenden Mittel (42) außerhalb des Bereichs (R) erstrecken.

3. Arbeitsfahrzeug nach Anspruch 1 oder 2, wobei die Stützstruktur (41) eine Längsachse (B) definiert und einen vorderen Abschnitt (51), der die Längsachse (B) schneidet, und zwei Seitenabschnitte (52) umfasst, die sich von gegenüberliegenden Seiten bezüglich der Längsachse (B) erstrecken, wobei der vordere Abschnitt (51) mit einem vorderen Abschnitt (61) der Kabine (5) verbunden ist und die zwei Seitenabschnitte (52) mit jeweiligen Seitenabschnitten (62) der Kabine (5) verbunden sind, wobei die stoßabsorbierenden Mittel (42) mindestens einen der zwei Seitenabschnitte (52) der Stützstruktur (41) umgeben.

4. Arbeitsfahrzeug nach Anspruch 3, wobei die Stützstruktur (41) einen Rahmen (71) umfasst, der im Wesentlichen als Viereck ausgeformt ist, wobei der vordere Abschnitt (51) der Stützstruktur (41) im Wesentlichen einer vorderen Kante des Vierecks entspricht und die zwei Seitenabschnitte (52) der Stützstruktur (41) im Wesentlichen Seitenkanten des Vierecks entsprechen, die mit der vorderen Kante verbunden sind.

5. Arbeitsfahrzeug nach einem der vorstehenden Ansprüche, wobei die stoßabsorbierenden Mittel (42) Verbindungsmittel (93) umfassen, um die zwei verformbaren Elemente (91) zu verbinden, wobei die Verbindungsmittel (93) starrer als die verformbaren Elemente (91) sind.

6. Arbeitsfahrzeug nach Anspruch 5, wobei die Verbindungsmittel (93) eine Stange (94) umfassen.

7. Arbeitsfahrzeug nach einem der vorstehenden Ansprüche, wobei die stoßabsorbierenden Mittel (42) zwei stoßabsorbierende Strukturen (101) umfassen, wobei jede stoßabsorbierende Struktur (101) zwei der verformbaren Elemente (91) umfasst.

8. Arbeitsfahrzeug nach Anspruch 7, wenn abhängig von Anspruch 3 oder 4, wobei die zwei stoßabsorbierenden Strukturen (101) jeweils die zwei Seitenabschnitte (52) der Stützstruktur (41) umgeben.

9. Arbeitsfahrzeug nach Anspruch 8, wenn abhängig von Anspruch 8, wobei jede stoßabsorbierende Struktur (101) den Stab (94) umfasst, wobei sich der Stab (94) jeder stoßabsorbierenden Struktur (101) im Wesentlichen parallel zu dem jeweiligen Seitenabschnitt (52) der Stützstruktur (41) erstreckt.

10. Arbeitsfahrzeug nach einem der Ansprüche 7 bis 11, wenn abhängig von Anspruch 4, wobei jede stoßabsorbierende Struktur (101) zwei Kopplungselemente (111) umfasst, die jeweiligen Ecken des Vierecks entsprechen und mit jeweiligen Enden des jeweiligen Seitenabschnitts (52) der Stützstruktur (41) verbunden sind.

11. Arbeitsfahrzeug nach Anspruch 10, wobei jede stoßabsorbierende Struktur (101) zwei Zwischenelemente (121) umfasst, wobei jedes Zwischenelement (121) zwischen einem der Kopplungselemente (111) und einem der verformbaren Elemente (91) angeordnet ist.

12. Arbeitsfahrzeug nach Anspruch 11, wobei sich jedes Zwischenelement (121) im Wesentlichen parallel zu dem vorderen Abschnitt (51) der Stützstruktur (41) erstreckt.

13. Arbeitsfahrzeug nach einem der Ansprüche 10 bis 12, wobei jedes Kopplungselement (111) mit einer jeweiligen Säule (12) der Kabine (5) verbunden ist.

14. Arbeitsfahrzeug nach einem der Ansprüche 7 bis 13, wobei jede stoßabsorbierende Struktur (101) von der Stützstruktur (41) abnehmbar ist.

15. Arbeitsfahrzeug nach einem der vorstehenden Ansprüche, umfassend einen Hilfsrahmen (131), der von der Stützstruktur (41) getragen wird, und einen oder mehrere Airbags (141), die von dem Hilfsrahmen (131) getragen werden.

16. Arbeitsfahrzeug nach Anspruch 15, wenn abhängig von Anspruch 2, wobei sich der Hilfsrahmen (131) intern zu der Region (R) erstreckt.

17. Arbeitsfahrzeug nach Anspruch 15 oder 16, wobei der Hilfsrahmen (131) zwei Halterungen (151) umfasst, um jeweils zwei der Airbags (141) zu tragen.

18. Arbeitsfahrzeug nach Anspruch 17, wenn abhängig von Anspruch 3 oder 4, wobei die zwei Halterungen (151) zu dem vorderen Abschnitt (51) der Stützstruktur (41) hin konvergierend sind.

## Revendications

1. Véhicule de travail comprenant une cabine (5), dans lequel la cabine (5) comprend une pluralité de montants (12) et un toit (14), un ensemble de sécurité de toit (31) étant interposé entre les montants (12) et le toit (14) ;
ledit ensemble de sécurité de toit (31) comprenant en outre une structure de support (41) reliée à la cabine (5) et un moyen d'absorption de chocs (42) conçu pour absorber de l'énergie en cas d'impact du véhicule (1) avec le sol (G), dans lequel le moyen d'absorption de chocs (42) est porté par la structure de support (41) et entoure au moins une partie d'un périmètre de la structure de support (41), et dans lequel
le moyen d'absorption de chocs (42) comprend deux éléments déformables (91), chaque élément déformable (91) étant relié à la structure de support (41),
ledit véhicule de travail étant **caractérisé en ce que** chaque élément déformable (91) comprend un élément en forme d'accordéon (92).

2. Véhicule de travail selon la revendication 1, dans lequel la structure de support (41) définit une région (R) et le moyen d'absorption de chocs (42) s'étend à l'extérieur de ladite région (R).

3. Véhicule de travail selon la revendication 1 ou 2, dans lequel la structure de support (41) définit un axe longitudinal (B) et comprend une partie avant (51) coupant l'axe longitudinal (B) et deux parties latérales (52) s'étendant à partir de côtés opposés par rapport à l'axe longitudinal (B), dans lequel la partie avant (51) est reliée à une partie avant (61) de la cabine (5) et les deux parties latérales (52) sont reliées à des parties latérales respectives (62) de la cabine (5), le moyen d'absorption de chocs (42) entoure au moins l'une des deux parties latérales (52) de la structure de support (41).

4. Véhicule de travail selon la revendication 3, dans lequel la structure de support (41) comprend un châssis (71) sensiblement en forme de quadrilatère, la partie avant (51) de la structure de support (41) correspondant sensiblement à un bord avant du quadrilatère et les deux parties latérales (52) de la structure de support (41) correspondant sensiblement aux bords latéraux du quadrilatère reliés au bord avant.

5. Véhicule de travail selon l'une quelconque revendication précédente, dans lequel le moyen d'absorption de chocs (42) comprend un moyen de liaison (93) pour relier les deux éléments déformables (91), le moyen de liaison (93) étant plus rigide que les éléments déformables (91).

6. Véhicule de travail selon la revendication 5, dans lequel le moyen de liaison (93) comprend une barre (94).

7. Véhicule de travail selon l'une quelconque revendication précédente, dans lequel le moyen d'absorption de chocs (42) comprend deux structures d'absorption de chocs (101), chaque structure d'absorption de chocs (101) comprenant deux desdits éléments déformables (91).

8. Véhicule de travail selon la revendication 7 lorsqu'elle dépend de la revendication 3 ou 4, dans lequel les deux structures d'absorption de chocs (101) entourent, respectivement, les deux parties latérales (52) de la structure de support (41).

9. Véhicule de travail selon la revendication 8 lorsqu'elle dépend de la revendication 8, dans lequel chaque structure d'absorption de chocs (101) comprend ladite barre (94), la barre (94) de chaque structure d'absorption de chocs (101) s'étendant sensiblement parallèlement à la partie latérale (52) respective de la structure de support (41).

10. Véhicule de travail selon l'une quelconque des revendications 7 à 11 lorsqu'elles dépendent de la revendication 4, dans lequel chaque structure d'absorption de chocs (101) comprend deux éléments d'accouplement (111) correspondant à des coins respectifs dudit quadrilatère et reliés à des extrémités respectives de la partie latérale (52) respective de la structure de support (41).

11. Véhicule de travail selon la revendication 10, dans lequel chaque structure d'absorption de chocs (101) comprend deux éléments intermédiaires (121), chaque élément intermédiaire (121) étant interposé entre l'un desdits éléments d'accouplement (111) et l'un desdits éléments déformables (91).

12. Véhicule de travail selon la revendication 11, dans lequel chaque élément intermédiaire (121) s'étend sensiblement parallèlement à la partie avant (51) de la structure de support (41).

13. Véhicule de travail selon l'une quelconque des revendications 10 à 12, dans lequel chaque élément d'accouplement (111) est relié à un montant (12) respectif de la cabine (5).

14. Véhicule de travail selon l'une quelconque des revendications 7 à 13, dans lequel chaque structure d'absorption de chocs (101) est détachable de la structure de support (41).

15. Véhicule de travail selon l'une quelconque des revendications précédentes, comprenant un sous-châssis (131) porté par la structure de support (41), et un ou plusieurs coussins gonflables (141) portés par le sous-châssis (131).

16. Véhicule de travail selon la revendication 15 lorsqu'elle dépend de la revendication 2, dans lequel le sous-châssis (131) s'étend à l'intérieur de ladite région (R).

17. Véhicule de travail selon la revendication 15 ou 16, dans lequel le sous-châssis (131) comprend deux supports (151) pour porter, respectivement, deux desdits coussins gonflables (141).

18. Véhicule de travail selon la revendication 17 lorsqu'elle dépend de la revendication 3 ou 4, dans lequel les deux supports (151) sont convergents vers la partie avant (51) de la structure de support (41).
